# DEMANDE DE BREVET EUROPEEN

(11) **EP 1 669 820 A1**
(43) Date de publication de la demande: **14.06.2006**
(21) Numéro de dépôt: 04106436.1
(22) Date de dépôt: 09.12.2004
(51) Int. Cl.: G04G 13/02, G08B 6/00

(54) **Procédé d'entraînement d'un dispositif vibrant pour un objet portable, qui comprend une bobine et une masse mobile**

(71) Demandeur: ETA SA Manufacture Horlogère Suisse, 2540 Grenchen (CH)
(72) Inventeur: Taghezout, Daho, 1110, Morges (CH)
(74) Mandataire: Vigand, Philippe

(57) **Abrégé**

Le procédé d'entraînement consiste à mettre en vibration une masse mobile d'un dispositif vibrant pour un objet portable à l'aide d'une série d'impulsions de tension fournies à la bobine du dispositif vibrant, qui est couplée électro-magnétiquement à la masse mobile. Dans une phase d'entretien des oscillations de la masse mobile après une phase de démarrage du dispositif vibrant, suivie d'une phase de mesure de la fréquence de résonance, des impulsions rectangulaires successives de tension de polarité alternée sont fournies par un circuit d'entraînement à la bobine. La largeur des impulsions successives est modulée de manière sensiblement similaire au cours de chaque période d'oscillation successive ce qui permet de définir une onde de tension sensiblement sinusoïdale (S_{F}) d'amplitude déterminée dont la fréquence fondamentale est adaptée à la fréquence de résonance de la masse mobile. En modifiant la modulation de largeur des impulsions de manière similaire dans chaque période d'oscillation, il est ainsi possible d'agir sur l'amplitude des oscillations de la masse mobile qui dépend de l'amplitude de l'onde sinusoïdale définie par la modulation de largeur des impulsions rectangulaires.

## Description

La présente invention concerne un procédé d'entraînement d'un dispositif vibrant pour un objet portable. Le dispositif vibrant comprend une masse mobile et une bobine de forme annulaire couplée électro-magnétiquement avec la masse mobile, afin de la faire osciller. Le dispositif vibrant peut servir notamment comme alarme silencieuse ou pour signaler un appel téléphonique.

Il existe plusieurs réalisations de dispositifs vibrants susceptibles de remplir la fonction notamment d'alarme silencieuse afin d'équiper des objets portables de petite taille, tels que des téléphones portables, des organiseurs traditionnels, des dispositifs de recherche de personnes ou des montres-bracelets. Au moins une bobine de ces dispositifs vibrants peut être électriquement activée pour actionner une masse afin de créer une vibration à basse fréquence qui peut être ressentie par le porteur d'un tel objet.

Généralement la fréquence des signaux électriques appliqués à la bobine est ajustée pour correspondre à la fréquence propre d'oscillation mécanique de la masse mobile du dispositif vibrant. De cette manière, une amplitude de vibration maximale peut être obtenue pour une quantité d'énergie électrique minimale fournie. La vibration du dispositif peut être commandée en fonction d'une programmation spécifique de l'objet portable de manière à avertir son porteur d'un événement spécifique, par exemple une heure de réveil, un appel téléphonique ou autre.

On peut citer à ce titre le document WO 02/46847, qui décrit un procédé d'entraînement d'un tel dispositif vibrant. Le dispositif vibrant comprend une masse mobile ayant un aimant permanent et une bobine couplée électro-magnétiquement à la masse mobile pour la faire osciller. Pour faire osciller la masse, un circuit d'entraînement doit fournir à la bobine du dispositif vibrant des impulsions rectangulaires de tension d'entretien de polarité alternée et de durée déterminée après une phase de démarrage du dispositif vibrant. L'amplitude des impulsions d'entretien correspond approximativement à la tension de pile alimentant électriquement le circuit d'entraînement.

Entre chaque impulsion de tension d'entretien, la bobine est déconnectée, c'est-à-dire qu'elle est placée dans un état haute impédance. Dans cet état, la bobine fournit une tension induite due au mouvement de l'aimant permanent de la masse oscillante. Une mesure de la fréquence de résonance est opérée à chaque passage par zéro de la tension induite dans le circuit d'entraînement afin d'ajuster la période des impulsions rectangulaires d'entretien fournies à la bobine.

Un inconvénient d'un tel procédé d'entraînement est qu'à chaque déconnexion de la bobine placée à l'état haute impédance, des surtensions, dont la constante de temps est dépendante des caractéristiques de la bobine, peuvent être observées. Ces surtensions peuvent endommager le circuit électronique d'entraînement ou d'alimentation. De plus avec ces surtensions, il doit être observé, avant la mesure de la fréquence, un temps de carence important, qui peut être de l'ordre de quelques centaines de microsecondes afin de ne pas détecter des passages par zéro intempestifs. Ce temps de carence, qui doit être observé, limite la fréquence d'oscillation à une valeur basse. Il est donc nécessaire de filtrer ces surtensions par des moyens adéquats soit à l'entrée d'un comparateur amplificateur du circuit, soit à la sortie du comparateur. Ceci implique de munir le circuit d'entraînement de composants électroniques supplémentaires à la fonction propre d'entretien des oscillations de la masse mobile, ce qui complique la réalisation dudit circuit.

Un autre inconvénient du procédé d'entraînement du document WO 02/46847 est que les impulsions de tension d'entretien sont composées d'une fréquence fondamentale f₀ et de fréquences harmoniques f₁, f₂, qui créent des pertes de puissance et des forces parasites, et qui s'opposent à la force active d'entraînement de la masse oscillante. De ce fait, une consommation électrique plus importante est constatée. Dans le cas d'une tension de pile déterminée, l'amplitude du signal à fréquence fondamentale relative aux impulsions rectangulaires d'entretien est à un niveau de tension qui peut être d'un tiers inférieur à la tension de pile, et ne peut ainsi pas être adaptée à une valeur plus élevée.

L'invention a donc pour but principal de pallier les inconvénients cités ci-dessus en réalisant un procédé d'entraînement d'un dispositif vibrant à l'aide de signaux électriques fournis à la bobine du dispositif, qui sont adaptés pour éviter des surtensions dans une phase d'entretien des oscillations de la masse mobile du dispositif. De plus, les harmoniques de la fréquence fondamentale, notamment les harmoniques de faible ordre, sont supprimées par l'intermédiaire des signaux électriques, car seule la composante fondamentale des signaux électriques fournis à la bobine fournit une force utile.

A cet effet, l'invention concerne un procédé d'entraînement d'un dispositif vibrant cité ci-devant qui se caractérise en ce que dans une phase d'entretien des oscillations périodiques de la masse mobile, le procédé consiste à fournir des impulsions rectangulaires successives de tension de polarité alternée à la bobine à l'aide d'un circuit d'entraînement connecté à des bornes de la bobine du dispositif vibrant, la largeur des impulsions successives étant modulée de manière sensiblement similaire au cours de chaque période d'oscillation successive afin de définir une onde de tension sensiblement sinusoïdale d'amplitude déterminée dont la fréquence fondamentale est adaptée à la fréquence de résonance de la masse mobile.

Un avantage du procédé selon l'invention réside dans le fait que la modulation de la largeur des impulsions de tension de polarité alternée dans chaque période d'oscillation permet de s'approcher d'un signal pseudo-sinuso'idal de fréquence fondamentale. Par ce fait, il est ainsi possible d'éliminer les harmoniques de la fréquence fondamentale en définissant une onde sensiblement sinusoïdale à l'aide de l'agencement desdites impulsions de tension dans chaque période d'oscillation. Principalement, les harmoniques de faible ordre (3, 5, 7, 9) sont éliminées, car elles conduisent à générer des forces indésirables.

Comme la masse mobile décrit un mouvement sinusoïdal par rapport à la bobine fixe du dispositif vibrant, il est donc avantageux d'alimenter ladite bobine par une onde de tension sensiblement sinusoïdale définie par l'agencement des impulsions rectangulaires de tension de largeur modulée. La fréquence fondamentale de cette onde sinusoïdale est adaptée à la fréquence de résonance de la masse mobile. Cela permet donc d'éliminer également des harmoniques de forces indésirables, et des pertes de puissance.

Il est à noter que comme il est difficile de réaliser un circuit d'entraînement susceptible d'alimenter directement la bobine du dispositif vibrant avec une onde de tension sinusoïdale, il est beaucoup plus facile de la définir par l'agencement des impulsions rectangulaires successives de tension.

En alimentant la bobine par des impulsions rectangulaires de tension sans interruption entre chaque impulsion, aucune surtension n'apparaît durant la phase d'entretien des oscillations périodiques de la masse mobile, ce qui est un autre avantage. L'amplitude de l'onde sinusoïdale définie peut être ajustée en fonction de la modulation de la largeur des impulsions dans chaque période d'oscillation entre une valeur proche de la tension d'alimentation du circuit d'entraînement et la masse. De cette manière, l'amplitude des oscillations de la masse mobile peut être ajustée par les impulsions successives de tension de polarité alternée. Un gain dans la consommation électrique peut ainsi être obtenue avec de tels signaux électriques d'alimentation de la bobine par rapport au procédé d'entraînement décrit en référence au document WO 02/46847.

De préférence pour la suppression des harmoniques, les impulsions rectangulaires successives de tension de polarité alternée sont agencées pour présenter une symétrie paire dans chaque demi période d'oscillation par rapport à un point milieu de la demi période, et une symétrie impaire dans chaque période d'oscillation par rapport à un point milieu de la période d'oscillation. 14 impulsions de tension par période d'oscillation peuvent avantageusement être fournies à la bobine du dispositif vibrant pour éliminer au moins les harmoniques d'ordre 3 et 5.

Les buts, avantages et caractéristiques du procédé d'entraînement du dispositif vibrant pour un objet portable apparaîtront mieux dans la description suivante d'au moins un mode de réalisation de l'invention en liaison avec les dessins dans lesquels :
- la figure 1 représente un circuit d'entraînement du dispositif vibrant pour la mise en oeuvre du procédé d'entraînement selon l'invention,
- la figure 2 représente un graphique de la tension aux bornes de la bobine au cours du temps de différentes phases de mise en vibration de la masse mobile du dispositif vibrant pour la mise en oeuvre du procédé d'entraînement selon l'invention,
- la figure 3 représente un graphique de la modulation de la largeur des impulsions de tension fournies à la bobine dans une période d'oscillation de la masse mobile pour la mise en oeuvre du procédé d'entraînement selon l'invention, et
- les figures 4a et 4b représentent une vue tridimensionnelle et une vue de côté d'un mode de réalisation du dispositif vibrant pour la mise en oeuvre du procédé d'entraînement selon l'invention.

Dans la description suivante, tous les éléments qui composent le circuit d'entraînement et le dispositif vibrant qui sont bien connus d'un homme du métier dans ce domaine technique, seront expliqués de manière simplifiée. De préférence, le dispositif vibrant et le circuit d'entraînement sont destinés à équiper un objet portable de petite taille, tel qu'une montre-bracelet de manière à fournir une alarme silencieuse par vibration d'une masse mobile du dispositif vibrant.

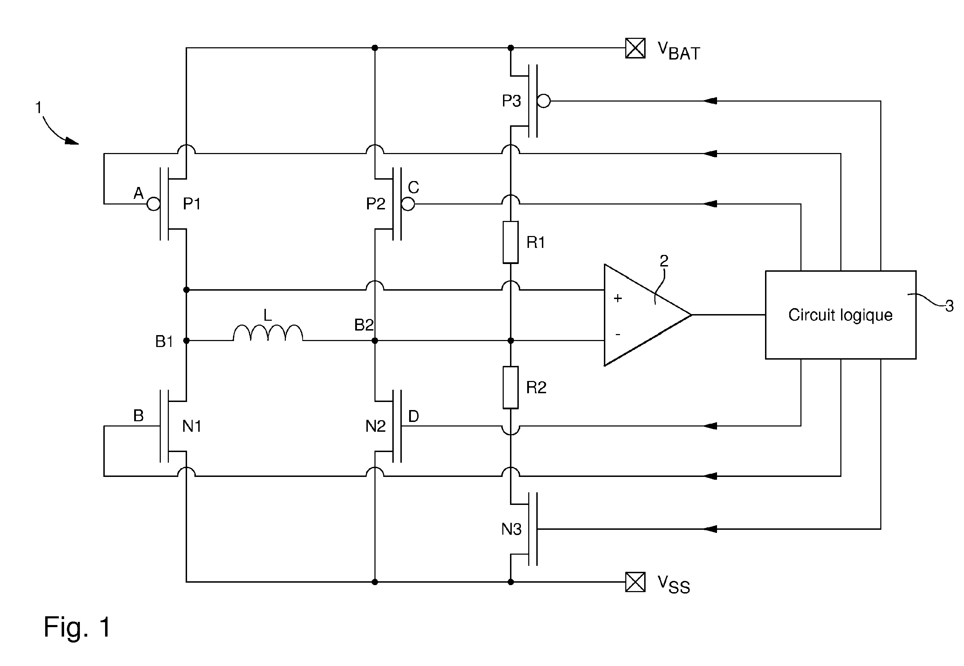

A la figure 1, un circuit d'entraînement 1 est représenté pour la mise en oeuvre du procédé d'entraînement du dispositif vibrant, qui comprend une masse mobile munie d'au moins un aimant permanent et une bobine de forme annulaire. Cette bobine, qui est indiquée par la référence L, est représentée schématiquement sur cette figure 1. Dans le circuit d'entraînement 1, la bobine est connectée par ses deux bornes B1 et B2 à des éléments de commutation N1, N2, P1, P2 qui forment un pont en H expliqué ci-dessous.

Pour son alimentation électrique, le circuit d'entraînement 1 est connecté par ses deux bornes V_{BAT} et V_{SS} à une source de tension non représentée, qui est de préférence une pile ou une batterie pouvant délivrer une tension continue de 3 V par exemple. Lors d'une commande de vibration du dispositif vibrant, les première B1 et deuxième B2 bornes de la bobine L sont susceptibles d'être portées à une tension nulle (masse V_{SS}) ou à une tension V_{BAT} en fonction des états des éléments de commutation N1, N2, P1, P2.

Les éléments de commutation sont de préférence constitués par quatre transistors de type MOS N1, N2, P1, P2, qui forment un pont en H afin de permettre de commander le dispositif vibrant dans un mode bipolaire. Le pont en H comprend ainsi une première et une seconde branche comprenant les transistors N1 et P1, respectivement les transistors N2 et P2, qui sont montés en série entre les tensions V_{BAT} et V_{SS}. Plus spécifiquement, les transistors P1 et P2 sont des transistors MOS de type P, et les transistors N1 et N2 des transistors MOS de type N. Comme on peut le voir sur la figure 1, la première borne B1 de la bobine L est connectée au noeud de connexion des transistors N1 et P1, et la deuxième borne B2 est connectée au noeud de connexion des transistors N2 et P2.

Les grilles des transistors P1, N1, P2, N2 sont respectivement commandés par des signaux A, B, C et D produits par un circuit logique 3 et expliqués ci-après.

Pour réaliser une mesure de la fréquence d'oscillation ou de résonance de la masse mobile en mouvement, le circuit d'entraînement comprend un comparateur 2 constitué d'un amplificateur différentiel. Cette fréquence peut se situer entre 132 à 138 Hz. Pour ce faire, les première et deuxième bornes B1, B2 de la bobine L sont respectivement reliées aux bornes non-inverseuse (borne positive) et inverseuse (borne négative) du comparateur 2. Ce comparateur 2 est chargé d'amplifier et de restituer en sortie la tension induite de mouvement de la masse mobile mesurée entre les bornes B1, B2 de la bobine L, lorsqu'elle est mise dans un état haute impédance.

Cette tension induite de mouvement est appliquée à l'entrée du circuit logique 3 chargé, d'une part, de générer les signaux de commande A, B, C, D nécessaires aux transistors N1, N2, P1, P2 du pont en H. Ces signaux de commande doivent assurer la génération d'au moins une impulsion rectangulaire de tension de démarrage à la bobine L, ainsi que des impulsions rectangulaires successives de tension de polarité alternée à largeur modulée dans une phase d'entretien des oscillations périodiques de la masse mobile. D'autre part, le circuit logique 3 est chargé de mesurer la fréquence de la tension induite issue du comparateur 2.

On ne s'attardera pas longuement sur la réalisation du circuit logique 3. L'homme du métier pourra se référer à la demande européenne EP 0 938 034, qui est incorporée ici par référence, pour obtenir les informations nécessaires lui permettant de réaliser concrètement le circuit d'entraînement 1 avec le circuit logique 3 sur la base des indications qui lui sont fournies ci-après.

Comme illustré dans la figure 1, le circuit d'entraînement 1 comprend par ailleurs avantageusement un diviseur de tension enclenchable, qui est chargé d'imposer une tension déterminée sur l'entrée inverseuse (entrée négative) du comparateur 2. Ce diviseur de tension, ici sous la forme d'un diviseur résistif, forme un moyen permettant de fixer l'entrée négative du comparateur 2 à un potentiel déterminé, lorsque la tension induite de mouvement de la masse mobile doit être observée uniquement dans une phase de mesure de la fréquence de résonance. Cette mesure de fréquence doit être réalisée quand la bobine L est placée dans un état haute impédance, c'est-à-dire quand les transistors N1, N2, P1 et P2 sont dans un état non conducteur. Ce diviseur résistif est déclenché dans les autres phases.

Plus spécifiquement, le diviseur résistif comprend un agencement en série entre les tensions V_{BAT} et V_{SS}, d'un premier transistor P-MOS P3, d'une première et seconde résistances R₁ et R₂, et d'un second transistor N-MOS N3. Le noeud de connexion entre les résistances R₁ et R₂ est relié à l'entrée inverseuse du comparateur 2 et les grilles des transistors P3 et N3 sont reliées au circuit logique 3.

Dans cet exemple de réalisation, on peut choisir par exemple de fixer le potentiel de la borne inverseuse du comparateur 2 à une tension égale à V_{BAT}/2 en utilisant pour ce faire des résistances R₁ et R₂ de valeurs sensiblement égales. Lorsque la bobine L est à l'état haute impédance, c'est-à-dire lorsque les transistors N1, N2, P1 et P2 du pont en H sont tous à l'état non-conducteur, le diviseur résistif est ainsi enclenché par l'activation des transistors P3 et N3 et une tension sensiblement égale à V_{BAT}/2 est appliquée à l'entrée inverseuse du comparateur 2. De la sorte, la valeur moyenne de la tension induite est fixée à ce niveau V_{BAT}/2.

En référençant la tension induite de mouvement de la masse mobile par rapport au niveau V_{BAT}/2, on assure que la tension induite de mouvement est toujours positive, son amplitude crête à crête étant inférieure à la tension V_{BAT}. Dans l'exemple de réalisation qui est décrit dans la présente demande, on comprendra que la tension induite de mouvement est échantillonnée à une fréquence déterminée. En fixant la valeur moyenne de la tension induite de mouvement à ce niveau V_{BAT}/2, tous les échantillons du signal sont ainsi positifs.

On comprendra aisément, que l'utilisation du diviseur résistif n'est pas strictement nécessaire. On comprendra également qu'un autre niveau moyen que V_{BAT}/2 pourrait être fixé par le diviseur résistif. L'exemple qui est présenté ici est particulièrement avantageux dans l'optique où il est désirable d'effectuer un traitement numérique du signal produit en sortie du comparateur 2.

Dans la phase de mesure de la fréquence d'oscillation, il peut être employé une autre technique de mesure que celle expliquée ci-dessus. Il peut être effectué une opération de mesure du courant par scanning jusqu'à obtenir une valeur minimale de courant.

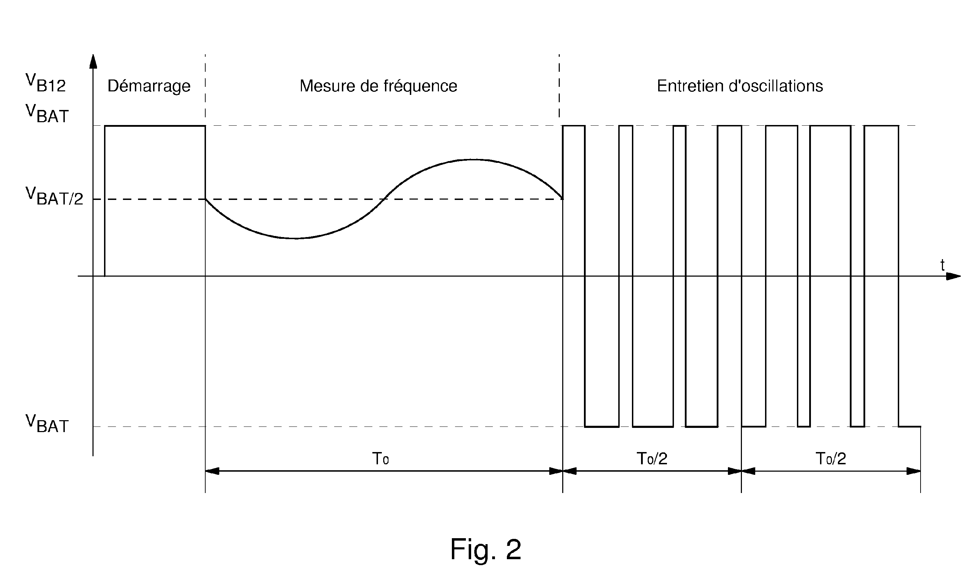

A la figure 2, il est représenté schématiquement différentes phases de mise en route du dispositif vibrant pour la mise en oeuvre du procédé d'entraînement selon l'invention. Plus spécifiquement, il est représenté l'évolution de la tension V_{B12} aux bornes de la bobine du dispositif vibrant au cours du temps. Dans une première phase, dite phase de démarrage, une impulsion rectangulaire de tension de démarrage est fournie à la bobine.

Cette première phase de démarrage, de mise en mouvement de la masse mobile, est suivie d'une seconde phase, dite phase de mesure de fréquence, durant laquelle la masse mobile du dispositif est laissée en oscillation libre. Durant cette seconde phase, le dispositif tendra à osciller selon sa fréquence propre d'oscillation, ci-après dénommée fréquence d'oscillation ou de résonance f₀. Cette fréquence de résonance f₀ est par exemple mesurée en déterminant la période d'oscillation T₀ de la tension induite générée par le mouvement de la masse durant cette seconde phase sur la base des passages par le niveau moyen de la tension induite de mouvement. Alternativement, on peut se contenter de mesurer la demi période d'oscillation du signal.

Cette seconde phase de mesure n'est pas strictement nécessaire car la période nominale T₀ peut être fixée au préalable si besoin est. Toutefois, comme la valeur de la fréquence de résonance est dépendante également des conditions de porter de l'objet portable, tel qu'une montre-bracelet, et d'un coefficient de frottement visqueux, il est préférable de la mesurer à l'aide du circuit d'entraînement. Cette mesure permet d'ajuster la période d'oscillation d'un ensemble d'impulsions rectangulaires de tension fournies à la bobine.

Une fois la période d'oscillation T₀ déterminée ou fixée, le dispositif vibrant entre dans une troisième phase, dite phase d'entretien des oscillations périodiques de la masse mobile, qui se prolonge jusqu'au terme de la mise en vibration du dispositif. Durant cette troisième phase, des impulsions rectangulaires successives de tension de polarité alternée sont fournies à la bobine. La largeur des impulsions varie ou est modulée par période d'oscillation de manière à définir une onde de tension pseudo-sinusoïdale à fréquence fondamentale. Cette fréquence fondamentale est censée correspondre à la fréquence de résonance de la masse mobile du dispositif vibrant.

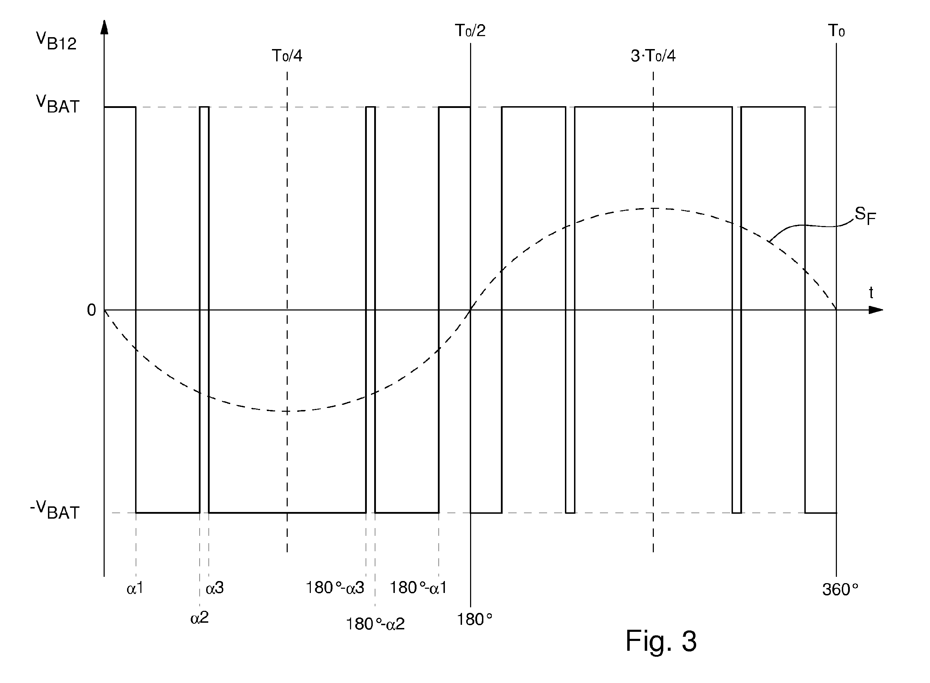

A la figure 3, il est représenté un graphique de la modulation de la largeur des impulsions de tension de polarité alternée, qui sont fournies à la bobine dans chaque période d'oscillation de la masse mobile pour la mise en oeuvre du procédé d'entraînement selon l'invention. Cette modulation de largeur d'impulsions est de préférence identique dans toutes les périodes d'oscillation jusqu'au terme de la mise en vibration du dispositif vibrant. Ce graphique représente donc une période T₀ d'oscillation définie sous forme angulaire de 0 à 360 °. L'inversion de signe de chaque impulsion est déterminée préférentiellement par un angle spécifique compris entre 0 et 360° étant donné que la fréquence de résonance mesurée peut varier en fonction des conditions de porter de l'objet portable. Cependant après la mesure de fréquence de la deuxième phase, cette fréquence de résonance est déterminée en principe pour toute la durée de vibration du dispositif vibrant.

Pour l'entraînement du dispositif vibrant selon l'invention, il est utilisé un procédé d'élimination des harmoniques d'ordre supérieur à 1 et de contrôle de l'amplitude du fondamental. En effet comme mentionné précédemment, les harmoniques d'ordre 3, 5, 7 et supérieures sont à l'origine des pertes dans la bobine et dans des parties en fer du dispositif vibrant. En éliminant ces harmoniques et en contrôlant l'onde de tension à fréquence fondamentale ainsi définie, on tend à s'approcher d'une tension sinusoïdale d'amplitude souhaitée.

De manière simple, il est possible d'éliminer notamment les harmoniques 3 et 5 par une modulation ou pseudo modulation de largeur d'impulsions comme représentée à la figure 2 sur une période temporelle d'oscillation définie sous la forme angulaire de 0 à 360°. La période d'oscillation présente une symétrie paire dans chaque demi période d'oscillation T₀/2 ou 180° par rapport à un point milieu de la demi période T₀/4 ou 90°. Cette période d'oscillation présente une symétrie impaire des impulsions par rapport à un point milieu de la période d'oscillation, c'est-à-dire par rapport à T₀/2 ou 180°. Sur la première demi période, les inversions de signe pour les impulsions rectangulaires successives ont lieu pour les valeurs d'angles □1, □2 et □3, et (180°-□3), (180°-□2) et (180°-□1). La seconde demi période est définie sur la base des angles de la première demi période mais avec des impulsions de polarité inverse. Cette forme d'onde permet d'éliminer un nombre discret d'harmoniques tout en imposant une amplitude déterminée de l'onde à fréquence fondamentale.

Dans les tableaux ci-dessous, il est représenté différentes valeurs des angles en fonction de l'amplitude désirée de l'onde sinusoïdale à fréquence fondamentale définie représentée par la courbe S_{F}. L'amplitude du fondamental peut varier entre 1.06 et 0.5 fois la tension de la pile suivant les valeurs d'angles choisies :

| Amplitude fondamental | 1.06 | 1.00 | 0.95 | 0.9 | 0.85 | 0.80 |
|---|---|---|---|---|---|---|
| Angle [°] | | | | | | |
| □1 | 7.887051 | 16.81522 | 18.00331 | 18.75188 | 19.35348 | 19.8853 |
| □2 | 26.97772 | 45.83502 | 50.54754 | 52.92703 | 54.26793 | 55.04801 |
| □3 | 35.22396 | 50.78858 | 56.11964 | 59.3802 | 61.68636 | 63.4694 |

| Amplitude fondamental | 0.75 | 0.70 | 0.65 | 0.60 | 0.55 | 0.55 |
|---|---|---|---|---|---|---|
| Angle [°] | | | | | | |
| □1 | 20.37667 | 20.841 | 21.28521 | 21.71332 | 22.12769 | 22.52973 |
| □2 | 55.4881 | 55.70542 | 55.7681 | 55.71848 | 55.5843 | 55.38451 |
| □3 | 64.93273 | 66.18637 | 67.29332 | 68.29485 | 69.21674 | 70.07847 |

Par le choix de l'amplitude du fondamental, c'est-à-dire de l'amplitude de l'onde sinusoïdale définie par la modulation de largeur des impulsions rectangulaires de tension de polarité alternée, il est possible de régler également l'amplitude d'oscillation de la masse mobile du dispositif vibrant. Ceci peut être souhaitable dans certaines configurations de l'objet portable, tel que dans une montre-bracelet de petit volume. Avec les tableaux des angles déterminés en fonction de l'amplitude du fondamental désiré, il est facile de calculer des valeurs temporelles de la largeur de chaque impulsion à l'aide d'une règle de trois en fonction de la valeur de la fréquence d'oscillation. Cette fréquence d'oscillation peut être située dans une gamme de 125 à 140 Hz, de préférence de l'ordre de 135 Hz par exemple.

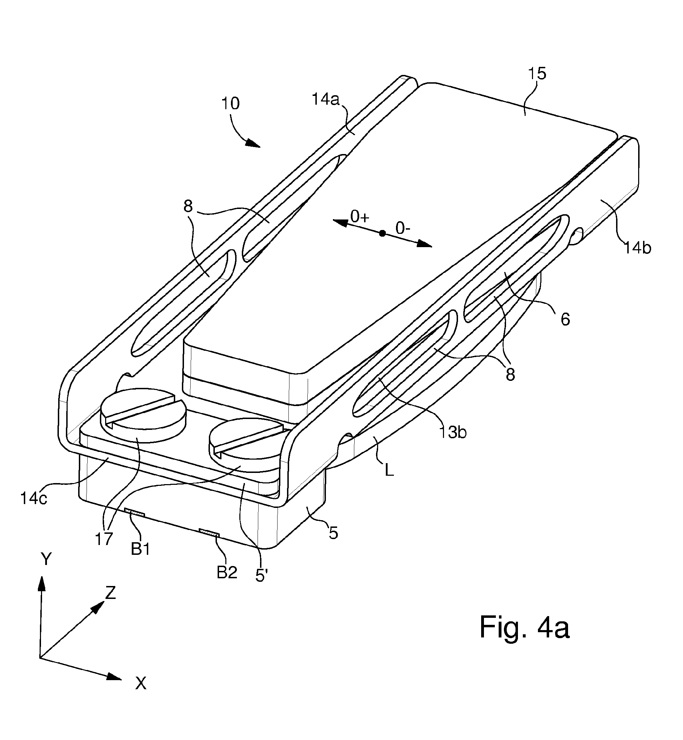

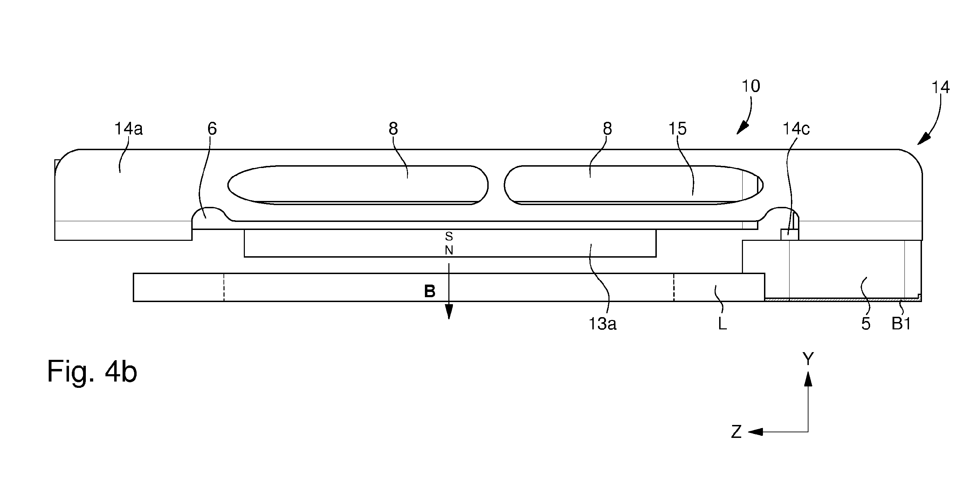

Les figures 4a et 4b représentent un mode de réalisation du dispositif vibrant 10 pour la mise en oeuvre du procédé d'entraînement selon l'invention. Le dispositif vibrant présenté est du type demi Voice Coil. Le dispositif vibrant 10 comprend tout d'abord une bobine plate annulaire L, qui est fixée en bordure à une structure amagnétique 5, au-dessous de laquelle apparaissent deux bornes de connexion B1 et B2 de la bobine. Le dispositif comprend encore une masse mobile 13a, 13b, 6 et 15 composée d'une structure magnétique qui est reliée à la structure amagnétique sans contact mécanique avec la bobine à l'aide d'un élément ressort 14.

La structure magnétique de la masse mobile comprend une plaque ferromagnétique 6 sur laquelle sont fixés deux aimants permanents 13a et 13b adjacents de direction de magnétisation opposée en regard respectivement de deux portions diamétralement opposées de la bobine. Les aimants génèrent un champ magnétique **B**, qui est conduit dans la plaque ferromagnétique 6, dans une direction selon l'axe Y. Lorsque la bobine est alimentée par les impulsions rectangulaires successives de tension, le courant passant dans les portions de bobine est sensiblement perpendiculaire au champ magnétique **B** dans la direction de l'axe Z. De ce fait, une force de Laplace dans une direction selon l'axe X est obtenue afin de faire osciller la masse mobile dans un plan sensiblement perpendiculaire à l'axe de la bobine L dans les directions représentées 0+ et 0-.

Pour obtenir une masse plus importante, il peut être prévu de placer une plaque de masse complémentaire 15 sur la plaque ferromagnétique 6. Cette plaque complémentaire 15 peut être réalisée dans un matériau tel qu'en laiton ou tungstène.

L'élément ressort 14, qui maintient la masse mobile, comprend une lame de base 14c fixée par deux vis 17 par l'intermédiaire d'une plaque amagnétique 5' sur la structure amagnétique 5, et deux lames ressorts 14a et 14b venant de matière avec la lame de base et disposées sur deux côtés opposés de la lame de base. Les lames ressorts 14a et 14b sont disposées perpendiculairement par rapport à la lame de base 14c, de manière que la section transversale forme un U. Une lame d'extrémité, non représentée, relie les extrémités des lames ressorts 14a et 14b opposées à la lame de base. Cette lame d'extrémité, sur laquelle est fixée une portion de la plaque ferromagnétique 6, est dans un plan sensiblement parallèle à la lame de base.

La plaque ferromagnétique 6 et la plaque complémentaire 15 sont placées entre les lames ressorts 14a et 14b avec ou sans contact direct avec chaque lame ressort. De préférence, la hauteur de la plaque ferromagnétique 6 et la plaque complémentaire 15 est inférieure à la hauteur de chaque lame ressort 14a et 14b. Les lames ressorts 14a et 14b peuvent comprendre chacune deux fentes traversantes longitudinales 8, qui sont dimensionnées pour ajuster une fréquence de résonance théorique du dispositif vibrant. Par cet ajustement de cette fréquence, le circuit d'entraînement du dispositif vibrant peut être de conception relativement simple.

Avec le dispositif vibrant tel que présenté aux figures 4a et 4b, l'inductance de la bobine est beaucoup plus faible que dans le cas d'une bobine montée sur une culasse ferromagnétique comme expliqué dans le document EP 0 625 738. La valeur de l'inductance peut être de l'ordre de 1 à 1.5 mH, alors que dans le cas d'une bobine montée sur une culasse ferromagnétique, cette valeur d'inductance peut être de l'ordre de 50 mH. La tension induite liée principalement au flux mutuel aimant-bobine est également plus faible avec cette faible inductance, et une éventuelle surtension de la bobine dans la phase de mesure de la fréquence d'oscillation peut être beaucoup moins importante sans endommager le circuit d'entraînement. Les dimensions d'un tel dispositif vibrant pour équiper notamment une montre-bracelet peuvent être de 10 mm de long, 4 mm de large et 2 mm de hauteur.

Bien entendu, le procédé d'entraînement peut être appliqué également à un dispositif vibrant tel que présenté dans le document EP 0 625 738. Avec un tel procédé d'entraînement d'un dispositif vibrant, il n'est ainsi pas nécessaire de munir le circuit d'entraînement de tout élément de filtrage, ce qui simplifie la réalisation dudit circuit et permet de réduire la consommation électrique.

A partir de la description qui vient d'être faite de multiples variantes de réalisation du procédé d'entraînement du dispositif vibrant peuvent être conçues par l'homme du métier sans sortir du cadre de l'invention définie par les revendications. Il peut être prévu au cours de la phase d'entretien des oscillations de placer la bobine dans un état haute impédance afin de réajuster la fréquence d'oscillation. Dans chaque période de l'onde sinusoïdale fondamentale, il peut être prévu un nombre plus important d'impulsions modulées de manière à éliminer des harmoniques d'ordre supérieur. Il peut être également prévu dans la phase de démarrage d'imposer deux ou plusieurs impulsions rectangulaires successives de polarité différente avant de placer la bobine à l'état haute impédance.

## Revendications

1. Procédé d'entraînement d'un dispositif vibrant (10) pour un objet portable, le dispositif comprenant une masse mobile (6, 13a, 13b, 15) et une bobine (L) couplée électro-magnétiquement à la masse mobile pour permettre de la faire osciller, **caractérisé en ce que** dans une phase d'entretien des oscillations périodiques de la masse mobile, le procédé consiste à fournir des impulsions rectangulaires successives de tension de polarité alternée à la bobine à l'aide d'un circuit d'entraînement (1) connecté à des bornes (B1, B2) de la bobine du dispositif vibrant, la largeur des impulsions successives étant modulée de manière sensiblement similaire au cours de chaque période d'oscillation successive afin de définir une onde de tension sensiblement sinusoïdale (S_{F}) d'amplitude déterminée dont la fréquence fondamentale est adaptée à la fréquence de résonance de la masse mobile.

2. Procédé d'entraînement selon la revendication 1, pour lequel le circuit d'entraînement comprend dans une première branche des premier et second éléments de commutation (P1, N1) montés en série entre une première et une seconde borne d'alimentation (V_{BAT}, V_{SS}) d'une source de tension, et dans une seconde branche des troisième et quatrième éléments de commutation (P2, N2) montés en série entre les deux bornes d'alimentation électrique, afin de former un pont en H avec la bobine, dont la première borne est connectée au noeud de connexion des premier et second éléments de commutation et la seconde borne est connectée au noeud de connexion des troisième et quatrième éléments de commutation, et un circuit logique (3) fournissant des signaux de commande (A, B, C, D) aux éléments de commutation afin d'ouvrir alternativement les premier et quatrième éléments de commutation (N1, P2), respectivement les second et troisième éléments de commutation (N2, P1) pour fournir des impulsions rectangulaires successives de tension de polarité alternée à la bobine, **caractérisé en ce que** l'amplitude des impulsions successives de tension de polarité alternée est sensiblement égale à la valeur de tension continue fournie par la source de tension, et **en ce que** la largeur des impulsions successives de tension de polarité alternée est modulée de manière similaire au cours de chaque période d'oscillation pour ajuster l'amplitude des oscillations de la masse mobile en fonction de l'amplitude de l'onde de tension sinusoïdale à fréquence fondamentale définie de manière à adapter cette amplitude aux conditions de porter de l'objet portable en augmentant ou diminuant l'amplitude de l'onde à fréquence fondamentale lors d'une augmentation ou une diminution d'un coefficient de frottement visqueux.

3. Procédé d'entraînement selon l'une des revendications précédentes, **caractérisé en ce que** les impulsions rectangulaires successives de tension de polarité alternée sont agencées pour présenter une symétrie paire dans chaque demi période d'oscillation par rapport à un point milieu de la demi période, et une symétrie impaire dans chaque période d'oscillation par rapport à un point milieu de la période d'oscillation.

4. Procédé d'entraînement selon l'une revendications 1 et 2, **caractérisé en ce qu'**il consiste à fournir une impulsion rectangulaire de tension dans une phase de démarrage de la masse mobile initialement au repos, et **en ce qu'**au terme de la durée de l'impulsion rectangulaire de démarrage, la bobine (L) est placée dans un état haute impédance par le circuit d'entraînement (1) afin de mesurer la fréquence d'oscillation de la masse mobile (6, 13a, 13b, 15), qui comprend au moins un aimant permanent (13a, 13b), par l'intermédiaire de la tension induite dans la bobine générée par le mouvement de la masse mobile par rapport à la bobine.

5. Procédé d'entraînement selon l'une des revendications 1 à 3, **caractérisé en ce que** dans la phase d'entretien des oscillations périodiques de la masse mobile, le procédé consiste à fournir à la bobine (L) du dispositif vibrant (10), un nombre N d'impulsions successives de polarité alternée pour chaque période d'oscillation, N étant un nombre pair supérieur à 6.

6. Procédé d'entraînement selon la revendication 5, **caractérisé en ce qu'**il est fourni à la bobine, 14 impulsions rectangulaires successives de tension de polarité alternée sur une période d'oscillation définie de 0 à 360°, la première inversion de signe entre la première et la seconde impulsions intervenant depuis le début de la période à un temps ou angle □1, la seconde inversion de signe entre la seconde et la troisième impulsions intervenant à un temps ou angle □2 supérieur à □1, la troisième inversion de signe entre la troisième et la quatrième impulsions intervenant à un temps ou angle □3 supérieur à □2 et inférieur à 90°, la quatrième inversion de signe entre la quatrième et la cinquième impulsions intervenant à un temps ou angle égal à 180°-□3, la cinquième inversion de signe entre la cinquième et la sixième impulsions intervenant à un temps ou angle égal à 180°-n2, la sixième inversion de signe entre la sixième et la septième impulsions intervenant à un temps ou angle égal à 180°-□1, les huitième à quatorzième impulsions dans la seconde demi période définie de 180 ° à 360 ° étant obtenue par une symétrie impaire des impulsions de la première demi période par rapport à 180 °.
